# EUROPÄISCHE PATENTSCHRIFT

(11) **EP 1 556 202 B1**
(45) Veröffentlichungstag und Bekanntmachung des Hinweises auf die Patenterteilung: **18.06.2008**
(21) Anmeldenummer: 03757520.6
(22) Anmeldetag: 27.10.2003
(51) Int. Cl.: B29C 47/00

(54) **RÜCKSPÜLBARE FILTERVORRICHTUNG FÜR GESCHMOLZENES MATERIAL UND VERTEILER FÜR EINE SOLCHE FILTERVORRICHTUNG**
BACKFLUSHABLE FILTER DEVICE FOR MOLTEN MATERIAL AND DISTRIBUTION UNIT FOR A FILTER DEVICE OF THIS TYPE
DISPOSITIF FILTRANT A LAVAGE A CONTRE-COURANT POUR MATIERE EN FUSION ET ORGANE DE DISTRIBUTION POUR UN TEL DISPOSITIF FILTRANT

(30) Priorität: 28.10.2002 AT 16292002
(43) Veröffentlichungstag der Anmeldung: 27.07.2005
(73) Patentinhaber: EREMA ENGINEERING-RECYCLING-MASCHINEN-ANLAGEN G.M.B.H., Freindorf, A-4052 Ansfelden (AT)
(72) Erfinder: BACHER, Helmut, A-4490 St. Florian (AT); SCHULZ, Helmuth, A-4020 Linz (AT); WENDELIN, Georg, A-4033 Linz (AT); DREU, Wolfgang, A-4030 Linz (AT)
(74) Vertreter: Wildhack, Helmut
(86) Internationale Anmeldenummer: PCT/AT2003/000322
(87) Internationale Veröffentlichungsnummer: WO 2004/037514

(56) Entgegenhaltungen:
- EP-A- 1 245 366
- DE-A- 10 056 557
- DE-C- 19 730 574

## Beschreibung

Die Erfindung bezieht sich auf eine rückspülbare Filtervorrichtung für geschmolzenes Material, insbesondere Kunststoffschmelze, mit einem Gehäuse, in welchem eine Siebanordnung angeordnet ist, die zumindest zwei voneinander getrennte Siebabschnitte aufweist, denen die zu filtrierende Schmelze über zumindest einen Verteiler zugeführt wird, der zumindest einen in einem mit einer Einlassöffnung für das zu filtrierende Material versehenen Gehäuse beweglichen Steuerkörper für die Rückspülung aufweist, der in der Filtrierstellung den Zustrom des zu filtrierenden Materiales zu allen Siebabschnitten über Verbindungskanäle freigibt, in einer Rückspülstellung hingegen den Zustrom des zu filtrierenden Materiales zum rückzuspülenden Siebabschnitt unterbricht und den Verbindungskanal des rückgespülten Siebabschnittes mit einem im Steuerkörper angeordneten und von diesem wegführenden Abfuhrkanal verbindet, wobei zumindest ein Großteil des Umfanges des Steuerkörpers von einem im Gehäuse des Verteilers liegenden Verteilerraum für zu filtrierendes Material umgeben ist, welcher Verteilerraum über die Verbindungskanäle mit allen an den Verteiler angeschlossenen Siebabschnitten verbindbar ist. Weiters bezieht sich die Erfindung auf einen Verteiler für eine solche Filtervorrichtung.

Eine rückspülbare Filtervorrichtung der eingangs beschriebenen Art ist bekannt (EP 1 245 366 A2, DE 197 30 574 C1). Bei diesen Konstruktionen ist der Steuerkörper von einem in seinem Gehäuse in Längsrichtung verschiebbaren Steuerkolben gebildet, der eine mittige Umfangsnut hat, die mit der Einlassöffnung in Strömungsverbindung steht und über die das zu filtrierende Material entweder zwei kolbenförmigen Siebträgern zugeführt wird, oder, wenn rückgespült werden soll, nur einem dieser Siebträger. In der Rückspülstellung steht ein zum mittigen Abfuhrkanal des Steuerkörpers führender Kanal mit der Abstromseite des rückgespülten Siebes in Verbindung. Nachteilig hieran ist der durch zwei voneinander getrennte Siebträgerkolben bedingte Aufwand sowie der Umstand, dass eine solche Bauweise auf nur zwei Siebe beschränkt ist. Ferner kann in der Umfangsnut des Steuerkolbens zu filtrierendes Material längere Zeit verbleiben, so dass die Gefahr einer Verkokung dieses Materials gegeben ist.

Bei einer anderen rückspülbaren Filtervorrichtung (AT 407 611 B) ist der Steuerkörper von einem in seinem Gehäuse verdrehbar gelagerten Drehkolben gebildet, der quer zu seiner Achse von zwei radialen Durchlasskanälen durchsetzt ist, die in der Filtrierstellung die Einlassöffnung mit zwei Siebabschnitten der Siebanordnung verbinden. Jeder dieser Siebabschnitte ist von einem Filterelement gebildet, das im Gehäuse der Filtereinrichtung angebracht ist. Durch Verdrehung des Drehkolbens um seine Längsachse kann einer der beiden Durchlasskanäle so verschwenkt werden, dass der Zustrom des zu filtrierenden Materiales zu dem ihm zugeordneten Filter abgesperrt ist, aber dieses rückzuspülende Filter mit einem im Drehkolben angeordneten Abfuhrkanal für verschmutztes, vom rückgespülten Filter abgeführtes Material verbunden wird. Nachteilig hieran ist bei der zeitweiligen Absperrung des Zustromkanales während des Rückspülvorganges, dass das in dem von der Einlassöffnung zum Drehkolben führenden Leitkanal befindliche Material stillsteht und daher zur Verkokung neigt. Außerdem ist es schwierig, eine solche Filtervorrichtung auf mehr als zwei Siebabschnitte auszuweiten.

Die Erfindung setzt sich zur Aufgabe, eine rückspülbare Filtervorrichtung der eingangs geschilderten Art so zu verbessern, dass die geschilderten Schwierigkeiten vermieden sind und einerseits ein ständiges Durchströmen aller während des Filtriervorganges zu den Siebabschnitten führenden Kanäle sichergestellt ist, also eine Verkokung des zu filtrierenden Materials vermieden ist, anderseits die Vorrichtung problemlos erweiterbar ist auf eine beliebige Anzahl von Siebabschnitten. Die Erfindung löst diese Aufgabe dadurch, dass von der Einlassöffnung Leitkanäle in die Bereiche der beiden Stirnenden des Verteilerraumes führen, welche Stirnenden im Bereich der äußersten Verbindungskanäle oder außerhalb des Bereiches aller Verbindungskanäle liegen und dass der Abfuhrkanal über einen Rückspülkanal zumindest eines den Verteilerraum überbrückenden Steges des Steuerkörpers in Verbindung mit dem Verbindungskanal des jeweils rückzuspülenden Siebabschnittes bringbar ist. Damit werden die Verbindungskanäle stets von außen, d.h. zur Mitte hin, angeströmt, sodass keine toten Winkel bestehen, in denen beim Filtriervorgang Kunststoffmaterial verbleiben und dadurch in seiner Qualität beeinträchtigt werden kann. Ein so angespülter Verteilerraum ist ständig von zu filtrierendem Material durchströmt, unabhängig davon, ob gerade ein Siebabschnitt rückgespült wird oder nicht.

Durch relativ zueinander versetzte Anordnung mehrerer Stege lässt sich diese Konstruktion problemlos auf eine hohe Anzahl von Siebabschnitten erweitern, wobei stets eine sektionsweise Rückspülung gewährleistet ist. Vorteilhaft ist auch, dass der rückgespülte Siebabschnitt während des Rückspülvorganges nicht bewegt werden muss, sodass sich ein üblicher Weise für die Halterung des Siebabschnittes verwendeter Siebträger beim Rückspülvorgang nicht abnützt. Der beim Rückspülvorgang unbewegte Siebträger bringt daher keine verbrannten oder abgebauten Schmelzeteilchen in die bereits gefilterte Schmelze ein. Die Vorrichtung ist auch einfach bedienbar, da durch bloßes Bewegen des Steuerkörpers in eine zur bisherigen Stellung unterschiedliche Stellung ein Siebabschnitt nach dem anderen von dem Schmelzezustrom abgesperrt wird und dabei mit dem Abfuhrkanal verbunden wird, unabhängig von der Anzahl der vorhandenen Siebabschnitte.

Im Rahmen der konstruktiven Realisierungsmöglichkeiten bestehen zwei grundsätzliche Varianten: Einerseits kann der Steuerkörper ein in dem ihn umschließenden Gehäuse verschiebbarer Schieber sein, wobei die zu den einzelnen Siebabschnitten führenden Verbindungskanäle relativ zueinander in Verschiebungsrichtung des Schiebers versetzt angeordnet sind. Anderseits kann der Steuerkörper ein um seine Längsachse in seinem Gehäuse verdrehbarer Drehkolben sein, der an seinen beiden Stirnenden in seinem Gehäuse dichtend gelagert ist, dazwischen jedoch vom Verteilerraum umgeben ist. Die erstere Bauweise benötigt infolge der Längsverschiebung des Schiebers zwar mehr Platz, ist aber hinsichtlich der Anzahl der Siebabschnitte theoretisch unbegrenzt, die zweitere Bauweise ist platzsparender.

Gemäß einer bevorzugten Ausführungsform der Erfindung besteht eine besonders vorteilhafte Bauweise darin, dass die Verbindungskanäle nur im den Steuerkörper umschließenden Gehäuse verlaufen und die Siebabschnitte aufnehmende Siebnester des Gehäuses der Filtervorrichtung unmittelbar an die Außenfläche des Gehäuses des Steuerkörpers im Bereich der jeweiligen Mündung des Verbindungskanales anschließen. Dies ergibt sehr kurze Wege zwischen dem Verteilerraum und den einzelnen Siebabschnitten. Dies hat zur Folge, dass die nach Beendigung des Rückspülvorganges im erwähnten Weg befindliche verschmutzte Rückspülmasse so gering wie möglich gehalten wird und daher beim nachfolgenden Filtriervorgang die Filtrierfunktion des betreffenden Siebabschnittes nicht wesentlich beeinträchtigt.

Besonders günstig ist es, wenn erfindungsgemäß die Siebanordnung eine Vielzahl von Siebabschnitten aufweist, die in zumindest einer Reihe angeordnet sind, deren Richtung parallel ist zur Längsrichtung des Verteilerraumes. Diese zahlreichen, voneinander getrennten Siebabschnitte sind jeweils getrennt rückspülbar und können bei zweckmäßiger Anordnung relativ zu den Verbindungskanälen zentral angeströmt und daher auch zentral rückgespült werden, was die Effizienz sowohl des Filtrierverhaltens als auch der Rückspülung erhöht.

Es ist zweckmäßig, jede Siebstation mit einer Stützlochplatte und einer Rückspüllochplatte auszubilden, wobei dazwischen zumindest eine Siebschicht angeordnet ist. Die beiden erwähnten Platten stützen die Siebschicht beim Filtriervorgang bzw. beim Rückspülvorgang ab und verhindern damit Verformungen der Siebschicht. Eine solche Bauweise lässt sich in einfacher Weise dadurch weiterbilden, dass zumindest ein Siebabschnitt durch eine in der Filtrierstellung zustromseitig angeordnete Trennwand vom benachbarten Siebabschnitt getrennt ist und zu jedem Siebabschnitt ein Verbindungskanal führt. Dies ergibt eine Vergrößerung der Anzahl voneinander unabhängiger Siebabschnitte und dadurch eine Verbesserung des gesamten Filtrierverhaltens. Die Stützlochplatte und die Rückspüllochplatte können bogenförmig ausgeführt sein, wobei die konvexe Seite in der Filtrierstellung zustromseitig liegt. Dies ergibt eine Vergrößerung der Siebfläche und der daraus resultierende Siebraum genügt den auftretenden Strömungsverhältnissen besser. Zumindest ein Siebabschnitt kann eine rechteckige oder quadratische Siebfläche, gegebenenfalls mit abgerundeten Ecken, haben, was eine Vergrößerung der aktiven Siebfläche ergibt, die gleichmäßig durchströmt werden kann.

Um die Aufteilung des zugeführten Schmelzestroms zu zentral gelegenen Siebabschnitten zu begünstigen, kann zumindest ein zusätzlicher Leitkanal zwischen den beiden zu den Stirnenden des Verteilerraumes führenden Leitkanälen in den Verteilerraum münden.

Ferner ist es möglich, zumindest zwei Steuerkörper in einem gemeinsamen Gehäuse vorzusehen, deren jeder im Bereich der Stirnenden seines Verteilerraumes über Leitkanäle angeströmt wird. Dies kann dazu beitragen, die Anströmung der Siebabschnitte zu vergleichmäßigen. Zugleich erleichtert dies die gemeinsame Rückspülung von mehr als einem Siebabschnitt. Ferner werden dadurch die Rückspülwege für die abzuspülenden, abgesiebten Schmutzteilchen noch kürzer und der Materialbedarf für die Rückspülreinigung geringer.

Der erfindungsgemäße Verteiler für eine rückspülbare Filtervorrichtung geht aus von einer Konstruktion, die ein Gehäuse und einen darin beweglichen Steuerkörper für die Rückspülung aufweist, dem das zu filtrierende Material über eine Einlassöffnung zugeführt wird und der in der Filtrierstellung den Zustrom dieses Materiales in zumindest zwei Verbindungskanäle freigibt, die mit Siebabschnitten der Filtervorrichtung verbindbar sind, wogegen der Steuerkörper in einer Rückspülstellung einen dieser Verbindungskanäle mit einem im Steuerkörper angeordneten Abfuhrkanal verbindet, wobei die Einlassöffnung mit einem den Steuerkörper großteils umgebenden, im Gehäuse angeordneten Verteilerraum in Verbindung steht. Ausgehend hiervon kennzeichnet sich die erfindungsgemäße Bauweise dieses Verteilers dadurch, dass Einlassöffnung mit dem Verteilerraum über zwei Leitkanäle in Verbindung steht, die in den Verteilerraum an dessen Stirnenden im Bereich der äußersten Verbindungskanäle oder außerhalb des Bereiches aller Verbindungskanäle münden. Wie erwähnt, hat dies den Vorteil zur Folge, dass die Anströmung der Verbindungskanäle stets von außen her, also zur Mitte hin, erfolgt und Toträume, in welchen zu filtrierendes Material längere Zeit verbleiben kann, vermieden sind.

Zumindest ein zusätzlicher Leitkanal kann zwischen den beiden zu den Stirnenden des Verteilerraumes führenden Leitkanälen in den Verteilerraum münden.

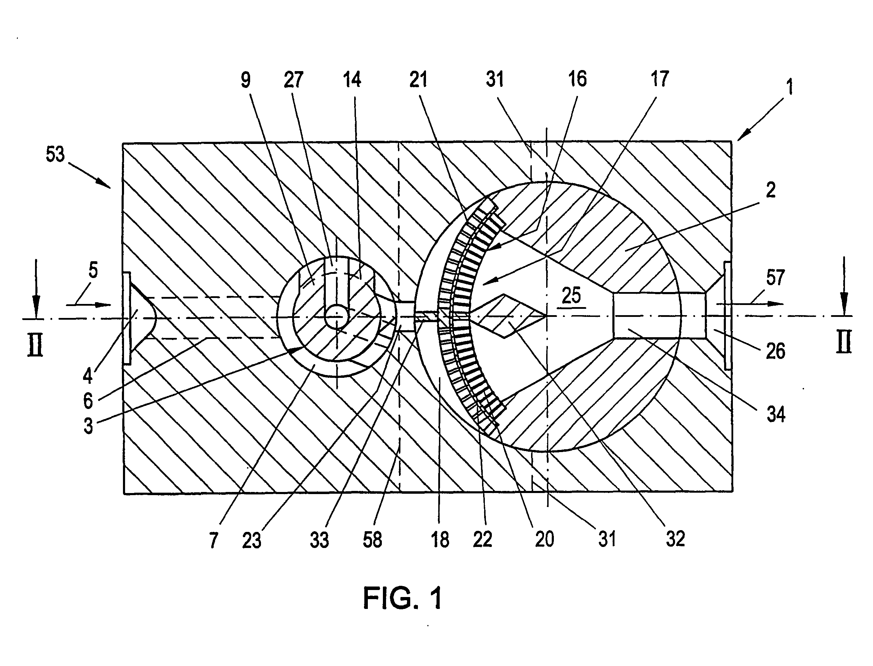

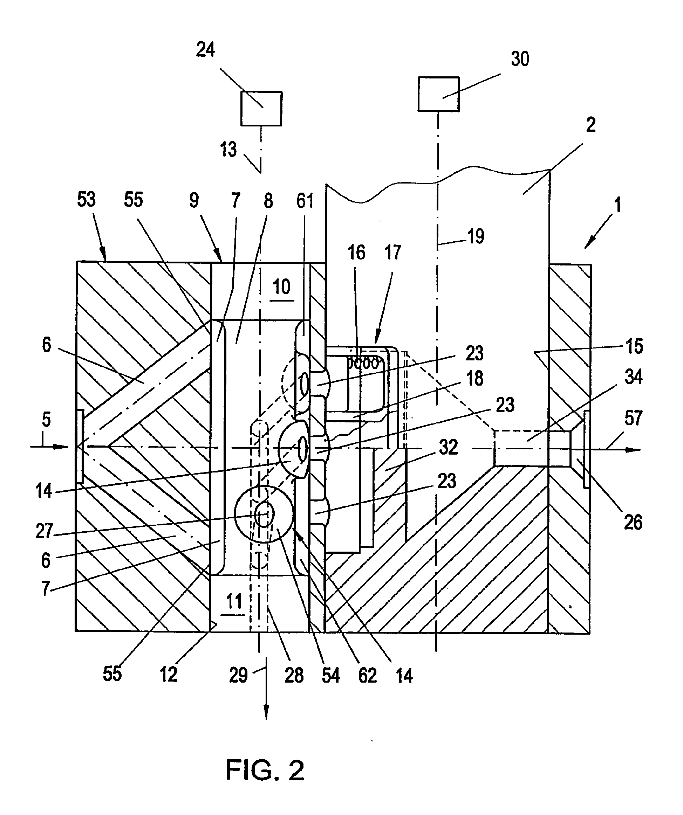

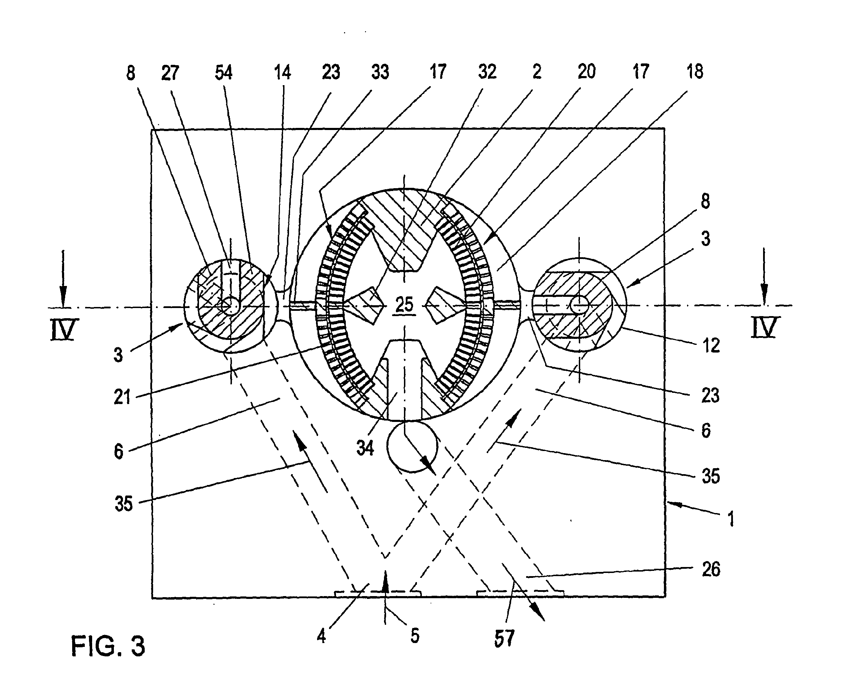

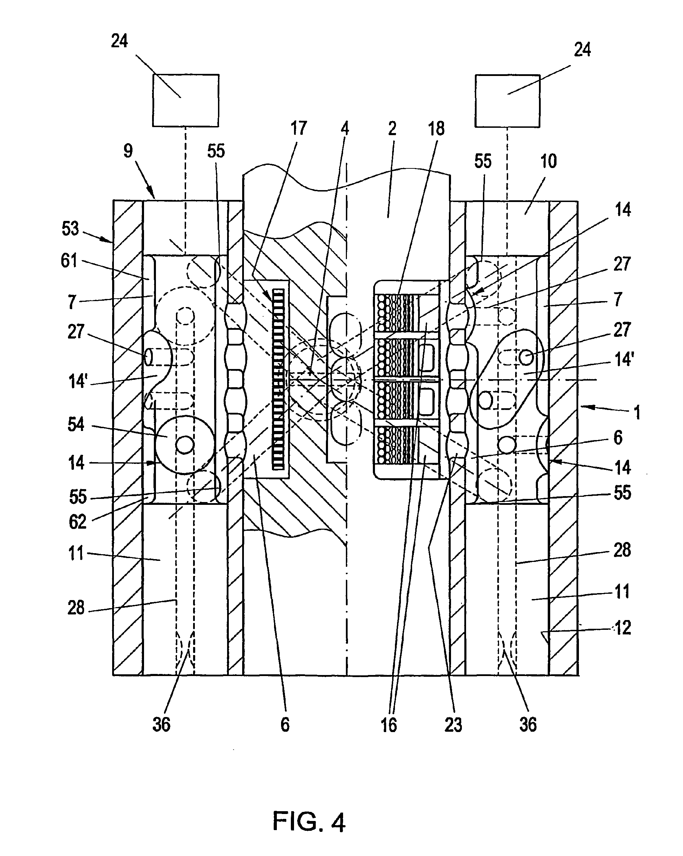

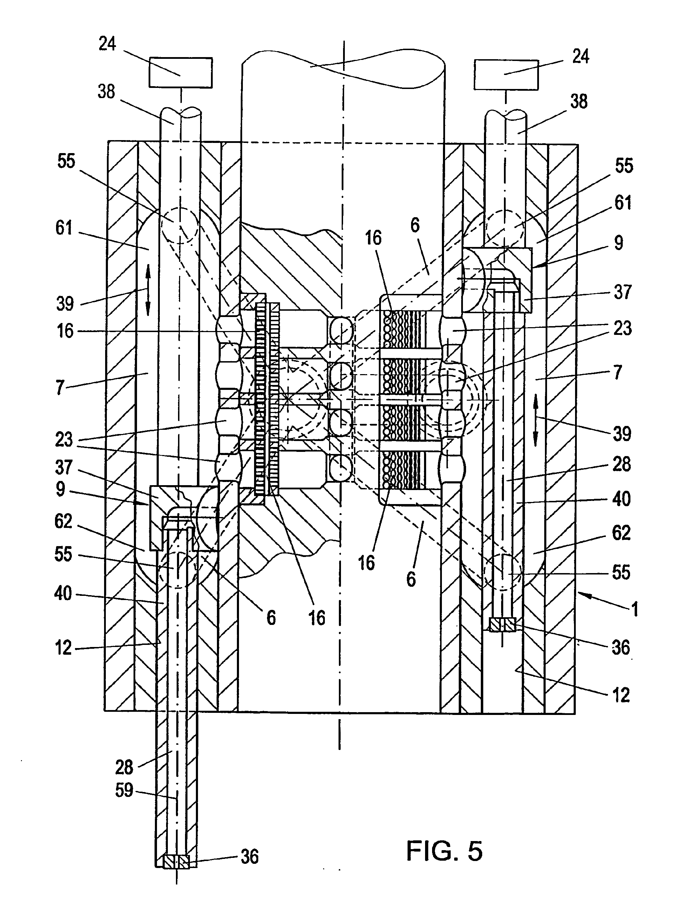

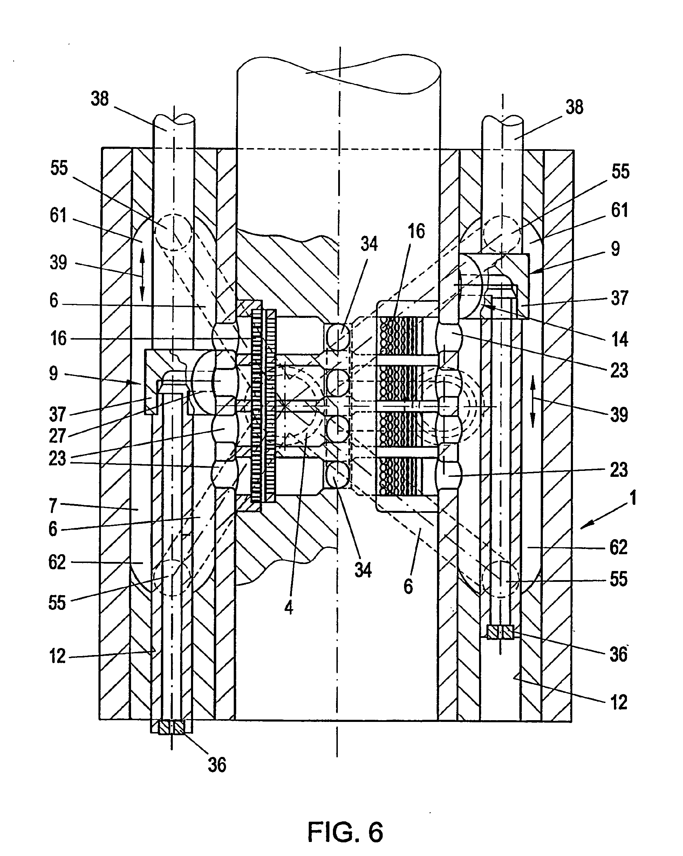

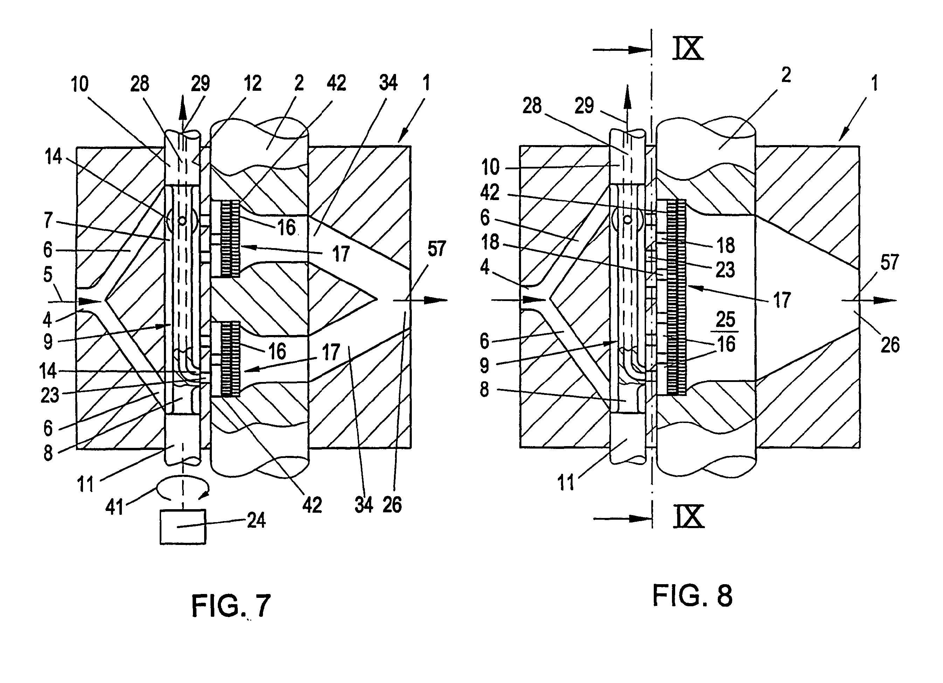

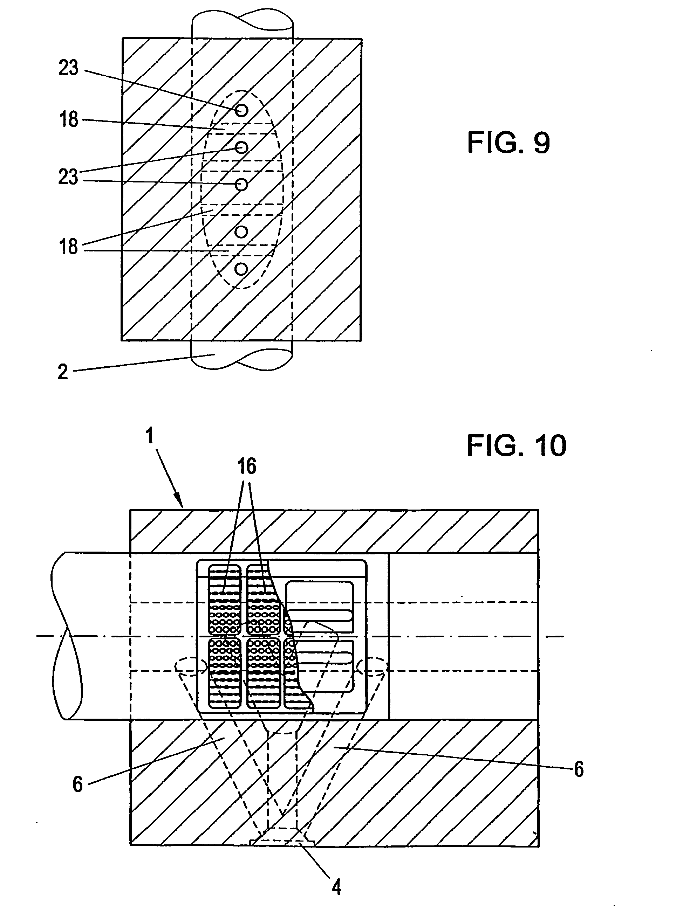

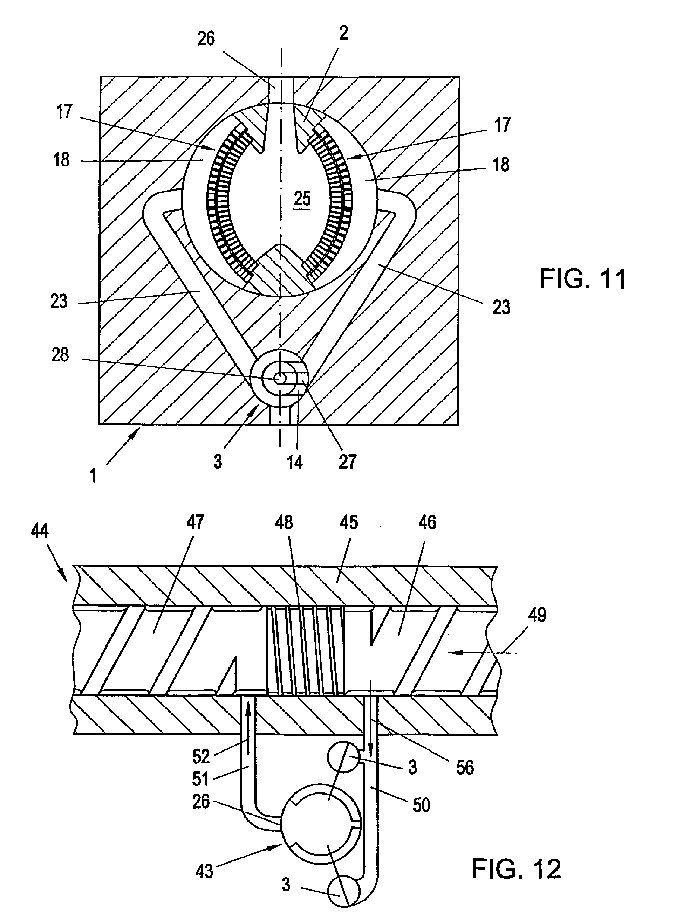

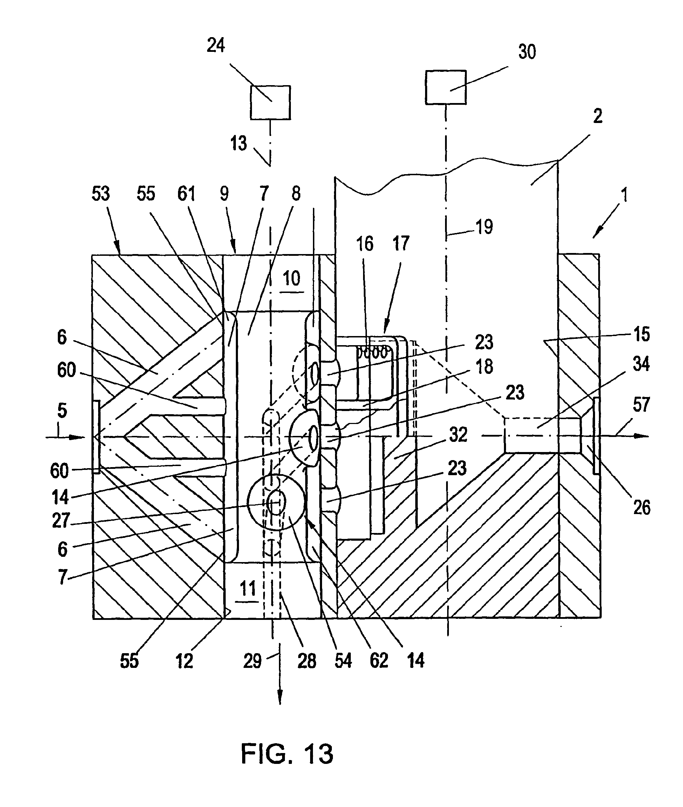

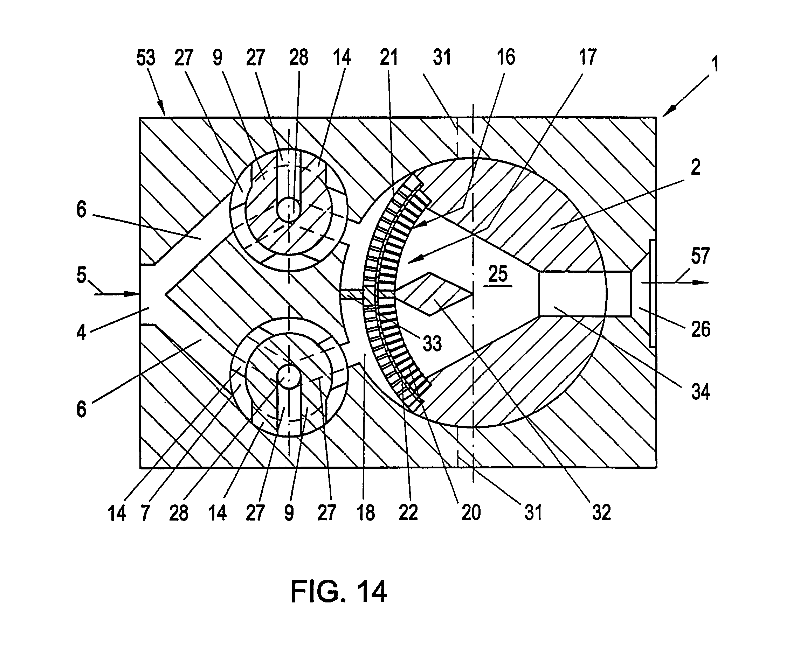

Weitere Kennzeichen und Vorteile der Erfindung ergeben sich aus der Beschreibung von Ausführungsbeispielen, die in den Zeichnungen schematisch dargestellt sind. Fig. 1 zeigt einen Schnitt durch ein erstes Ausführungsbeispiel mit einem einzigen, als Drehkolben ausgebildeten Verteiler. Fig. 2 ist ein Schnitt nach der Linie II - II der Fig. 1. Fig. 3 zeigt in einem Schnitt ähnlich Fig. 1 eine Ausführungsform mit zwei Verteilern und Fig. 4 ist ein Schnitt nach der Linie IV - IV der Fig. 3. Fig. 5 zeigt in einem Schnitt ähnlich Fig. 3 eine Ausführungsform mit zwei als Schieber ausgebildeten Verteilern, wobei sich beide Verteiler in der Filtrierstellung befinden. Fig. 6 zeigt einen Schnitt ähnlich Fig. 5, wobei sich jedoch der linke Verteiler in einer Rückspülstellung befindet. Fig. 7 zeigt im Schnitt eine Ausführungsform mit zwei Siebanordnungen, deren jede in Siebteilflächen unterteilt ist. Fig. 8 zeigt in einem Schnitt ähnlich Fig. 7 eine Ausführungsvariante mit einer einzigen Siebanordnung, die in fünf unabhängig voneinander rückspülbare Siebteilflächen unterteilt ist. Fig. 9 zeigt einen Schnitt nach der Linie IX - IX der Fig. 8. Fig. 10 zeigt eine Ausführungsform mit rechteckig ausgebildeten Siebteilflächen. Fig. 11 zeigt das Schema einer Ausführungsform, bei welcher ein einziger Verteiler zwei einander gegenüberliegenden Siebanordnungen zugeordnet ist. Fig. 12 zeigt schematisch den Anbau einer Filtriervorrichtung an eine Vorrichtung zum Plastifizieren bzw. Agglomerieren von Kunststoff. Fig. 13 zeigt eine Ausführungsform mit zusätzlichen Leitkanälen. Fig. 14 zeigt eine Ausführungsform mit zwei Steuerkörpern.

Die Ausführungsform nach den Fig. 1 und 2 hat ein Gehäuse 1 für einen Siebträger 2 und ein Gehäuse 53 für einen diesem zugeordneten Verteiler 3. Das Gehäuse 53 hat eine Einlassöffnung 4 für den Zustrom der zu filtrierenden Schmelze, die insbesondere von geschmolzenem thermoplastischen Kunststoffmaterial gebildet ist. Das in Richtung des Pfeiles 5 in die Einlassöffnung 4 strömende Material gelangt in zwei Leitkanäle 6, die zu den beiden Stirnenden eines Verteilerraumes 7 führen, der den Großteil des Umfanges eines als Drehkolben 8 ausgebildeten Steuerkörpers 9 des Verteilers 3 umgibt. An seinen beiden Stirnenden 61, 62 ist dieser Verteilerraum 7 durch zylindrische Abschnitte 10, 11 des Drehkolbens 8 abgeschlossen, mit welchen der Drehkolben 8 in einer Bohrung 12 des Gehäuses 1 um seine Längsachse 13 drehbar, jedoch dichtend gelagert ist. Der Steuerkörper 9 trägt zwischen den beiden zylindrischen Abschnitten 10, 11 mehrere den Verteilerraum 7 durchsetzende Stege 14, die in Umfangsrichtung des Verteilerraumes relativ zueinander versetzt sind, und deren jeder von einer noppenartigen Ausbuchtung 54 der Oberfläche des Steuerkörpers 9 gebildet ist. Die der Wand der Bohrung 12 zugewendete Oberfläche jedes Steges 14 bzw. der ihn bildenden Ausbuchtung 54 ist der Form der Bohrung 12 angepasst, sodass der Steg 14 flächig dichtend an der Wand der Bohrung 12 anliegt.

Der Siebträger 2 ist als zylindrischer Kolben ausgebildet, der in einer Bohrung 15 des Gehäuses 1 sitzt. An seiner dem Verteiler 3 zugewendeten Seite trägt der Siebträger 2 mehrere in seiner Längsrichtung nebeneinander angeordnete Siebabschnitte 16, von welchen in Fig. 2 der Einfachheit halber nur einer dargestellt ist. Diese Siebabschnitte 16 bilden zusammen eine Siebanordnung 17 zur Filtrierung des ihr zugeführten Materiales. Die einzelnen Siebabschnitte 16 sind durch Trennwände 18 voneinander getrennt, welche zustromseitig jeder Siebanordnung 17 angeordnet sind und sich im Wesentlichen normal zur Längsachse 19 des Siebträgers 2 erstrecken. Jeder Siebabschnitt 16 weist eine im Filtrierbetrieb abstromseitig angeordnete Stützlochplatte 20 und eine zustromseitig angeordnete Rückspüllochplatte 21 auf. Zwischen den beiden Platten 20, 21 liegt eine Siebschicht 22, welche die eigentliche Filterwirkung ausübt. Die beiden Platten 20, 21 dienen zur Aufnahme des von der filtrierten bzw. rückgespülten Schmelze ausgeübten Druckes und die in den beiden Platten 20, 21 vorgesehenen Löcher sind so groß, dass sie die Strömung der zugeführten Schmelze bzw. des Filtrates nicht wesentlich behindern. Die Stützlochplatte 20 und die Rückspüllochplatte 21 sind bogenförmig ausgeführt, wobei die konvexe Seite beim Filtriervorgang zustromseitig liegt. Jedem Siebabschnitt 16 ist ein Verbindungskanal 23 zugeordnet, durch welchen die aus dem Verteilerraum 7 zugeführte Schmelze zum betreffenden Siebabschnitt 16 strömen kann. Wie Fig. 2 zeigt, liegen alle Verbindungskanäle 23 zwischen den beiden durch die zylindrischen Abschnitte 10, 11 des Steuerkörpers 9 begrenzten Stirnenden des Verteilerraumes 7 und auch zwischen den Mündungen 55 der Leitkanäle 6 in den Verteilerraum 7, sodass alle zur Filtrierung dienenden Verbindungskanäle 23 stets von den Stirnenden des Verteilerraumes 7 her angeströmt werden. Die von den Leitkanälen 6 zugeführte Schmelze strömt dabei an den Stegen 14 vorbei. Dies bringt den Vorteil, dass sich im Verteilerraum 7 keine toten Räume bilden können, in welchen sich Kunststoffmaterial längere Zeit unbewegt aufhalten und dadurch thermisch geschädigt werden kann. Äußerstenfalls können die äußersten Verbindungskanäle 23, das sind die in der Reihe der Verbindungskanäle 23 an den beiden Enden dieser Reihe liegenden Verbindungskanäle 23, den beiden Leitkanälen 6 gegenüber liegen, also diese beiden Leitkanäle 6 im Bereich der äußersten Verbindungskanäle 23 angeordnet sein.

In der Filtrierstellung ist der Steuerkörper 9 des Drehkolbens 8 durch eine nur schematisch dargestellte Einrichtung 24 in eine derartige Drehstellung gebracht, dass keiner der in Umfangsrichtung und in Längsrichtung des Drehkolbens 8 relativ zueinander versetzten Stege 14 einem Verbindungskanal 23 gegenüberliegt. Die zu filtrierende Schmelze kann daher ungehindert aus dem gesamten Verteilerraum 7 in alle Verbindungskanäle 23 und damit zu den dahinterliegenden Siebabschnitten 16 strömen. Die Siebschicht 22 jedes Siebabschnittes 16 hält die Verunreinigungen zurück, das Filtrat gelangt in einen hinter allen Siebabschnitten 16 liegenden Sammelraum 25 und strömt aus diesem durch einen zu einer Auslassöffnung 26 führenden Auslasskanal 34 in Richtung des Pfeiles 57 aus dem Gehäuse 1 ab.

Soll hingegen einer der Siebabschnitte 16 rückgespült werden, so wird der Steuerkörper 9 mittels der Einrichtung 24 so verdreht, dass der dem rückzuspülenden Siebabschnitt 16 gegenüberliegende Steg 14 vor den ihm zugeordneten Verbindungskanal 23 gebracht wird. Die flächige Anlage der Stirnfläche des Steges 14 an der Wand der Bohrung 12 wirkt dichtend, so dass für den betreffenden Verbindungskanal 23 der Einstrom der zu filtrierenden Schmelze abgesperrt wird. Hingegen wird dieser Verbindungskanal 23 in Strömungsverbindung gebracht mit einem den Steg 14 durchsetzenden Rückspülkanal 27, welcher sich radial oder schräg (Fig. 2) im Drehkolben 8 erstreckt. Alle Rückspülkanäle 27 münden in einen im Drehkolben 8 zentral in dessen Längsachse 13 verlaufenden Abfuhrkanal 28, durch welchen die rückgespülte Masse in Richtung des Pfeiles 29 ins Freie oder in einen nicht dargestellten Sammelraum gelangt.

Bei Rückspülung eines Siebabschnittes 16 bleiben die zuvor geschilderten Verhältnisse für alle anderen Siebabschnitte 16 ungeändert, das heißt, diese anderen Siebabschnitte 16 filtrieren weiter, nur für den rückzuspülenden Siebabschnitt wird der ihm zugeordnete Verbindungskanal 23 durch den davor liegenden Steg 14 in Bezug auf den Zustrom des zu filtrierenden Materiales aus dem Verteilerraum 7 abgeschlossen. Für diesen rückzuspülenden Siebabschnitt 16 strömt nun gereinigtes Filtrat aus dem Sammelraum 25 durch die Stützlochplatte 20 und in zum Filtriervorgang umgekehrter Richtung durch die Siebschicht 22 hindurch und nimmt von dieser die an ihr angesammelten Verunreinigungen mit, welche durch die Löcher der Rückspüllochplatte 21 vom rückgespülten Siebabschnitt 16 abgeführt und durch den betreffenden Verbindungskanal 23 in den Rückspülkanal 27 und durch diesen in den Abfuhrkanal 28 geleitet werden. Es gelangt daher kein Rückspülmaterial in den Verteilerraum 7.

Um den beschriebenen Rückspülvorgang für jeden einzelnen Siebabschnitt 16 unabhängig von den anderen Siebabschnitten durchführen zu können, sind die Stege 14 am Umfang des Drehkolbens 8 in dessen Längsrichtung und in Umfangsrichtung relativ zueinander versetzt, so dass jeweils ein Steg 14 in dichtende Anlage an den den Verbindungskanal 23 umgebenden Wandabschnitt der Bohrung 12 gebracht werden kann, die anderen Stege 14 jedoch so weit von den ihnen zugeordneten Verbindungskanälen 23 entfernt sind, dass der Zustrom der zu filtrierenden Masse in diese Verbindungskanäle 23 nicht gestört wird.

Wie ersichtlich, braucht beim Rückspülvorgang der Siebträger 2 nicht bewegt zu werden. Dies ist vorteilhaft, weil sich dadurch der Siebträger beim Rückspülvorgang nicht abnützt und keine verbrannten oder abgebauten Schmelzeteilchen aus einem Spalt zwischen Gehäuse und dem Abstromkanal im Siebträger in die bereits gefilterte Schmelze gelangen können. Jedoch kann in an sich bekannter Weise der Siebträger 2 durch eine nur schematisch dargestellte Einrichtung 30 in Richtung seiner Längsachse 19 verschoben werden, um einzelne oder alle Siebabschnitte 16 aus dem Gehäuse 1 freizulegen, so dass ein Siebwechselvorgang in einfacher Weise stattfinden kann. Dies ermöglicht es, das Gehäuse für den Siebträger 2 und den Verteiler 3 einstückig auszubilden, was in den Fig. 1 und 2 dargestellt ist. Eine Alternative dazu besteht darin, das Gehäuse zweiteilig auszubilden, wobei die in Fig. 1 strichliert dargestellte Trennfuge 31 so angeordnet ist, dass nach Entfernung des den Verteiler 3 aufnehmenden Gehäuses 53 die gesamte Siebanordnung 17 für einen Siebwechselvorgang frei liegt. Eine andere Möglichkeit für die Anordnung einer solchen Trennfuge und damit für die bauliche Trennung der beiden Gehäuse 1, 53 ist durch die ebenfalls strichliert in Fig. 1 dargestellte Trennfuge 58 gegeben, die zweckmäßig durch die Verbindungskanäle 23 läuft. In beiden Fällen ist es möglich, das Gehäuse des Steuerkörpers 9 des Verteilers 3 an das Gehäuse 1 des Siebträgers 2 anzuflanschen. Die getrennte Ausführung der beiden Gehäuse 1, 53 hat den Vorteil, dass der Verteiler 3 und der Siebträger 2 voneinander baulich unabhängige Bauteile bilden und zwecks Austausch (z.B. bei Verschleiss) oder Reparatur unabhängig voneinander bearbeitet bzw. ausgewechselt werden können. Der Verteiler kann daher einen gesonderten im Handel erhältlichen Bauteil bilden.

Es ist zweckmäßig, die Länge der Verbindungskanäle 23 so gering wie möglich zu bemessen, was das Verhalten beim Rückspülvorgang verbessert.

Wie ersichtlich, sind sowohl beim Filtriervorgang als auch beim Rückspülvorgang stets alle Verbindungskanäle 23 durchströmt, auch der Verteilerraum 7 zur Gänze. Es kann daher nicht zu einer Verkokung oder sonstigen thermischen Schädigung des zugeführten Materiales kommen.

Die bogenförmige Form der Siebanordnung 17 hat außer einer Vergrößerung der Siebfläche auch den Vorteil, dass sehr hohe Drücke beim Filtriervorgang aufgenommen werden können. Falls gewünscht oder erforderlich, kann jedoch ein zusätzlicher Stützkörper 32 an der beim Filtriervorgang abstromseitig liegenden Seite der Siebanordnung 17 angeordnet sein, der zweckmäßig strömungsgünstig geformt ist, z.B. als eine im Querschnitt rhombenförmige Rippe. (Fig. 1)

Ebenso ist es gegebenenfalls zweckmäßig, die konvexe Seite der Siebanordnung 17 zusätzlich zu den Trennwänden 18 durch Querrippen 33 abzustützen, um den beim Rückspülvorgang auftretenden Druck besser abzufangen.

Die Ausführungsform nach den Fig. 3 und 4 bildet im Wesentlichen eine Verdoppelung der Konstruktion nach den Fig. 1 und 2. Demgemäß sind zwei in einem gemeinsamen Siebträger 2 Rücken an Rücken angeordnete Siebanordnungen 17 vorgesehen, deren jeder ein Verteiler 3 zugeordnet ist. Die Bauweise jeder dieser Siebanordnungen 17 und jedes dieser Verteiler 3 entspricht der im Zusammenhang mit der Konstruktion nach den Fig. 1 und 2 beschriebenen Bauweise. Beide Verteiler 3 werden über je zwei Leitkanäle 6 angeströmt. Vom für beide Siebanordnungen 17 gemeinsamen Sammelraum 25 führt ein Auslasskanal 34 zur Auslassöffnung 26, die zum Unterschied von der Konstruktion nach den Fig. 1 und 2 an derselben Seite des Gehäuses 1 angeordnet ist wie die Einlassöffnung 4. Die Strömungsrichtung des zu filtrierenden Materiales in den Leitkanälen 6 ist durch Pfeile 35 angedeutet.

Aus Fig. 4 ist ersichtlich, dass es möglich ist, die Stege 14 für zwei benachbarte Rückführkanäle 27 zu einem einzigen Steg 14' zusammenzufassen. Ferner ist es zweckmäßig, am Auslassende des Abfuhrkanales 28 eine Drossel 36 vorzusehen, um beim Rückspülen einen Druckabfall im Gesamtsystem zu verhindern.

Wie ersichtlich, befindet sich der in den Fig. 3 und 4 links dargestellte Drehkolben 8 in der Stellung, in welcher alle Siebabschnitte 16 filtrieren, wogegen sich der in den Fig. 3 und 4 rechts dargestellte Drehkolben 8 in einer Stellung befindet, in welcher der in Fig. 4 oben dargestellte Verbindungskanal 23 für die Filtrierung abgeschlossen ist, wobei jedoch der diesem Verbindungskanal zugeordnete Siebabschnitt 16 rückgespült wird und die rückgespülte Masse durch den im in der Abschlussstellung befindlichen Steg 14 angeordneten Rückspülkanal 27 in den Abfuhrkanal 28 geleitet wird.

Die Ausführungsform nach den Fig. 5 und 6 hat anstelle von Drehkolben als Steuerkörper 9 in Längsrichtung der Verteilerräume 7 verschiebbare Schieber 37, die mit Zugstangen 38 verbunden sind, welche durch die Einrichtungen 24 in Richtung der Doppelpfeile 39 hin- und her verschiebbar sind. Auf der den Zugstangen 38 gegenüberliegenden Seite ist jeder Schieber 37 mit einem eine Verlängerung 40 des Schiebers 37 bildenden Rohr verbunden, welches innen den Abfuhrkanal 28 enthält und in der Bohrung 12 in seiner Längsrichtung dicht geführt ist. Jeder dieser Schieber 37 ist in eine Stellung verschiebbar, in welcher er außerhalb des Bereiches der Verbindungskanäle 23 liegt, diese Stellung ist für die beiden Schieber 37 in Fig. 5 dargestellt und entspricht der Filtrierstellung, in welcher der Zustrom der zu filtrierenden Masse zu allen Siebabschnitten 16 freigegeben ist. In der in Fig. 6 dargestellten Betriebsstellung befindet sich der rechte Schieber 37 ebenfalls außerhalb des Bereiches der Verbindungskanäle 23, der linke Schieber 37 jedoch in einer Position, in welcher sein Rückspülkanal 27 in Strömungsverbindung gebracht ist mit dem Verbindungskanal 23 des zweiten Siebabschnittes 16 (in Fig. 6 von oben gezählt). Wie aus den Fig. 5 und 6 ersichtlich ist, liegen auch bei dieser Konstruktion die Mündungen 55 der Leitkanäle 6 in den Verteilerraum außerhalb des Bereiches der Verbindungskanäle 23 und auch außerhalb der äußersten Grenzlagen des Schiebers 37, um die Anströmung der Verbindungskanäle 23 von außen sicherzustellen und Toträume zu vermeiden.

Wie ersichtlich, braucht für die beschriebenen Funktionen der Schieber 37 nur einen einzigen Steg 14 zu haben. Es kann jedoch der Schieber 37 auch zwei oder mehrere Stege 14 aufweisen, die in einer Reihe angeordnet sind, deren Richtung übereinstimmt mit der Verschieberichtung des Schiebers 37. Auf diese Weise ist dann die gleichzeitige Rückspülung von zwei oder mehr Siebabschnitten 16 möglich. Selbstverständlich muss jedoch dafür Sorge getroffen sein, dass auch dann der Schieber 37 zur Gänze, das heißt mit allen seinen Stegen 14, in eine Lage verschiebbar ist, in welcher er außerhalb des Bereiches aller Verbindungskanäle 23 liegt, um die gleichzeitige Filtrierstellung aller Siebabschnitte 16 sicherzustellen. Ferner muss für eine einwandfreie Funktion sichergestellt sein, dass der Schieber 37 nicht unabsichtlich um seine Längsachse 59 verdreht werden kann. Dies kann in einfacher Weise durch einen entsprechenden Querschnitt der Verlängerung 40 bzw. der diesen Querschnitt aufnehmenden Bohrung 12 sichergestellt werden, z.B. durch einen Rechteck-Querschnitt.

Die Bauweise nach den Fig. 5 und 6 erfordert zwar einen größeren Platzbedarf in Richtung des Doppelpfeiles 39, hat aber den Vorteil einer einfacheren Bauweise des Steuerkörpers 9 und vor allem den Vorteil, dass die Anzahl der in Reihe nebeneinanderliegenden Siebabschnitte 16 theoretisch unbegrenzt ist.

Die nur schematisch dargestellte Bauweise nach Fig. 7 hat als Steuerkörper 9 ebenfalls einen Drehkolben 8, der durch die Einrichtung 24 in Richtung des Pfeiles 41 um seine Längsachse verdrehbar ist mit seinen Endabschnitten 10, 11 dichtend in der Bohrung 12 gelagert ist. Der Einfachheit halber sind nur zwei der Stege 14 des Steuerkörpers 9 dargestellt, von denen der untere Steg 14 in Rückspülstellung steht, wogegen der obere Steg 14 den Weg der zu filtrierenden Masse aus dem Verteilerraum 7 in dem ihm gegenüberliegenden Verbindungskanal 23 freigibt. Unterschiedlich zu den bisher beschriebenen Konstruktionen ist, dass die Siebabschnitte 16 auf zwei Siebanordnungen 17 verteilt sind, deren jede in einem Siebnest 42 sitzt, welche beiden Siebnester 42 im Abstand voneinander in Richtung der Längsachse des Verteilerraumes 7 gegeneinander versetzt angeordnet sind. Der Abstrom des Filtrates aus den beiden Filteranordnungen 17 erfolgt durch je einen Auslasskanal 34, wobei sich diese beiden Kanäle 34 in der Auslassöffnung 26 vereinigen.

Bei der Ausführungsform nach den Fig. 8 und 9 liegt ebenfalls ein Drehkolben 8 als Steuerkörper 9 vor, dessen Bauweise und Anordnung ähnlich ist jener nach Fig. 7. Unterschiedlich zu Fig. 7 ist jedoch, dass der Siebträger 2 lediglich ein einziges Siebnest 42 aufweist, in welchem eine in mehrere Siebabschnitte 16 unterteilte Siebanordnung 17 liegt. Die Siebabschnitte 16 sind voneinander durch Trennwände 18 getrennt und daher gesondert anspülbar und rückspülbar. Die Trennwände 18 erstrecken sich parallel zueinander von Seitenwand zu Seitenwand des Siebnestes 42 und bilden gleichzeitig eine Abstützung der Siebanordnung 17 in Rückspülrichtung. Es ist ersichtlich, dass die Verbindungskanäle 23 zweckmäßig so angeordnet sind, dass sie jeweils mittig liegen in Bezug auf den vom jeweiligen Verbindungskanal 23 versorgten Siebabschnitt 16, um eine möglichst gleichmäßige Anströmung der gesamten aktiven Fläche des Siebabschnittes 16 zu gewährleisten.

Fig. 10 zeigt, dass die einzelnen Siebabschnitte nicht kreisförmig bzw. von Kreisabschnitten gebildet sein müssen. Viel mehr bietet die Erfindung die Möglichkeit, die Siebabschnitte rechteckig oder quadratisch zu formen, was den Vorteil einer im Vergleich zu Kreisabschnitten vergrößerten aktiven Siebfläche und einer gleichmäßigeren Anströmung ergibt. Die Ecken des rechteckigen bzw. quadratischen Siebabschnittes können abgerundet sein, um strömungsmäßig tote Winkel zu vermeiden.

Bei allen Ausführungsformen kann selbstverständlich auch mehr als ein Siebträger vorgesehen sein, und es können an jedem Siebträger eine Vielzahl von Siebnestern angeordnet sein, wobei ebenso die Anzahl der Siebabschnitte pro Siebnest theoretisch unbegrenzt ist.

Fig. 11 zeigt eine Ausführungsvariante, bei welcher zwei einander gegenüber liegende, Rücken an Rücken im Siebträger 2 angeordnete Siebanordnungen 17 von einem gemeinsamen Verteiler 3 mit dem zu filtrierenden Material über die Verbindungskanäle 23 versorgt bzw. über dieselben Verbindungskanäle 23 rückgespült werden. Im Vergleich zu den bisher beschriebenen Bauweisen hat diese Variante den Vorteil einer kleineren bzw. platzsparenden Bauweise, erfordert jedoch längere Verbindungskanäle 23.

Fig. 12 zeigt die Zuordnung einer erfindungsgemäßen rückspülbaren Filtervorrichtung 43 zu einer Vorrichtung 44 zum Plastifizieren oder Agglomerieren von Kunststoff. Diese Vorrichtung 44 hat ein Gehäuse 45, in welchem zwei Schneckenabschnitte 46, 47 gelagert sind, die untereinander durch einen zwischen ihnen angeordneten, als Dichtung wirkenden weiteren Schneckenabschnitt 48 verbunden sind, dessen Förderrichtung entgegengesetzt gerichtet ist zur Förderrichtung der Schneckenabschnitte 46, 47, die durch einen Pfeil 49 angedeutet ist. Dadurch wird das vom Schneckenabschnitt 46 geförderte thermoplastische Kunststoffmaterial gezwungen, durch eine Öffnung der Wand des Gehäuses 45 in Richtung des Pfeiles 56 die beiden Verteiler 3 der Filtervorrichtung 43 über einen Kanal 50 anzuströmen. Von deren Auslassöffnung 26 strömt das Filtrat in Richtung des Pfeils 52 durch einen Kanal 51 in eine weitere Öffnung der Wand des Gehäuses 45 und gelangt dadurch zurück zum in Förderrichtung nachgeschalteten Schneckenabschnitt 47, der das filtrierte Kunststoffmaterial zu einer Extruderdüse oder einem sonstigen Auslass fördert.

Der Siebträger 2 muss nicht als Kolben mit Kreisquerschnitt ausgebildet sein. Vielmehr ist es in vielen Fällen günstig, den Siebträger 2 als Flachschieber, z.B. mit Rechteck-Querschnitt, auszubilden, was in einfacher Weise eine ungewollte Verdrehung des Siebträgers 2 um seine Längsachse verhindert.

Bei der Ausführungsform nach Fig. 13, welche jener nach Fig. 2 ähnelt, sind zusätzliche Leitkanäle 60 vorgesehen, welche von den beiden zu den Stirnenden 61, 62 des Verteilerraumes 7 führenden Leitkanälen 6 abzweigen und in den Bereich des Verteilerraumes 7 münden, welcher zwischen diesen beiden Stirnenden 61, 62 liegt. Diese zusätzlichen Leitkanäle 60 haben zweckmäßig kleineren Querschnitt als die Leitkanäle 6, sie sind natürlich so angeordnet, dass bei Rotation des Drehkolbens 8 keine direkte Verbindung zu den Rückspülkanälen 27 besteht. Diese zusätzlichen Leitkanäle 60 bringen Vorteile hinsichtlich der Aufteilung des zugeführten Schmelzestromes zu den zentral gelegenen Siebabschnitten 16 und allgemein Vorteile hinsichtlich einer Verbesserung der Strömungsverhältnisse. Diese Ausführungsform eignet sich daher besonders für Konstruktionen, bei denen eine Vielzahl von Siebabschnitten 16 in Achsrichtung des Siebträgers 2 nebeneinander angeordnet sind.

Die Ausführungsform nach Fig. 14 unterscheidet sich von jener nach Fig. 1 dadurch, dass zwei Steuerkörper 9 in einem gemeinsamen Gehäuse 53 angeordnet sind. Jedem dieser Steuerkörper 9 ist ein eigener Verteilerraum 7 zugeordnet, wobei die Ausbildung jedes Steuerkörpers 9 der im Zusammenhang mit Fig. 1 beschriebenen Ausbildung entspricht. Jeder Verteilerraum 7 wird an seinen beiden Stirnenden über die Leitkanäle 6 angeströmt. Diese Ausführungsform hat den Vorteil noch kürzerer Rückspülwege für die abzuspülenden Verunreinigungsteilchen, weiters wird das Volumen an gereinigter Schmelze, welche für den Rückspülvorgang erforderlich ist, verringert. Die Querrippen 33 sind hierbei nützlich für die zusätzliche Unterteilung der Siebanordnung 17 in einzelne Siebabschnitte 16, denen die Verteiler 9 zugeordnet sind.

Selbstverständlich ist es auch möglich, jedem Steuerkörper 9 ein eigenes Gehäuse zuzuordnen und gegebenenfalls die Anströmung über mehr als eine Einlassöffnung 4 vorzunehmen.

## Patentansprüche

1. Rückspülbare Filtervorrichtung für geschmolzenes Material, insbesondere Kunststoffschmelze, mit einem Gehäuse (1), in welchem eine Siebanordnung (17) angeordnet ist, die zumindest zwei voneinander getrennte Siebabschnitte (16) aufweist, denen die zu filtrierende Schmelze über zumindest einen Verteiler (3) zugeführt wird, der zumindest einen in einem mit einer Einlassöffnung (4) für das zu filtrierende Material versehenen Gehäuse (53) beweglichen Steuerkörper (9) für die Rückspülung aufweist, der in der Filtrierstellung den Zustrom des zu filtrierenden Materiales zu allen Siebabschnitten (16) über Verbindungskanäle (23) freigibt, in einer Rückspülstellung hingegen den Zustrom des zu filtrierenden Materiales zum rückzuspülenden Siebabschnitt (16) unterbricht und den Verbindungskanal (23) des rückgespülten Siebabschnittes (16) mit einem im Steuerkörper (9) angeordneten und von diesem wegführenden Abfuhrkanal (28) verbindet, wobei zumindest ein Großteil des Umfanges des Steuerkörpers (9) von einem im Gehäuse (53) des Verteilers (3) liegenden Verteilerraum (7) für zu filtrierendes Material umgeben ist, welcher Verteilerraum (7) über die Verbindungskanäle (23) mit allen an den Verteiler (3) angeschlossenen Siebabschnitten (16) verbindbar ist, **dadurch gekennzeichnet, dass** von der Einlassöffnung (4) Leitkanäle (6) in die Bereiche der beiden Stirnenden (61, 62) des Verteilerraumes (7) führen, welche Stirnenden (61, 62) im Bereich der äußersten Verbindungskanäle (23) oder außerhalb des Bereiches aller Verbindungskanäle (23) liegen und dass der Abfuhrkanal (28) über einen Rückspülkanal (27) zumindest eines den Verteilerraum (7) überbrückenden Steges (14) des Steuerkörpers (9) in Verbindung mit dem Verbindungskanal (23) des jeweils rückzuspülenden Siebabschnittes (16) bringbar ist.

2. Vorrichtung nach Anspruch 1, **dadurch gekennzeichnet,**
- **dass** der Steuerkörper (9) ein in dem ihn umschließenden Gehäuse (53) verschiebbarer Schieber (37) ist, und
- **dass** die zu den einzelnen Siebabschnitten (16) führenden Verbindungskanäle (23) relativ zueinander in Verschiebungsrichtung des Schiebers (37) versetzt angeordnet sind.

3. Vorrichtung nach Anspruch 1, **dadurch gekennzeichnet, dass** der Steuerkörper (9) ein um seine Längsachse (13) in seinem Gehäuse (53) verdrehbarer Drehkolben (8) ist, der an seinen beiden Stirnenden (10), (11) in seinem Gehäuse (53) dichtend gelagert ist, dazwischen jedoch vom Verteilerraum (7) umgeben ist.

4. Vorrichtung nach einem der Ansprüche 1 bis 3, **dadurch gekennzeichnet, dass** die Verbindungskanäle (23) nur im den Steuerkörper umschließenden Gehäuse (53) verlaufen und die die Siebabschnitte (16) aufnehmenden Siebnester (42) des Gehäuses (1) der Filtervorrichtung unmittelbar an die Außenfläche des Gehäuses (53) des Steuerkörpers (9) im Bereich der jeweiligen Mündung des Verbindungskanales (23) anschließen.

5. Vorrichtung nach einem der Ansprüche 1 bis 4, **dadurch gekennzeichnet, dass** die Siebanordnungen (17) in einem gemeinsamen Siebträger (2) angeordnet sind.

6. Vorrichtung nach einem der Ansprüche 1 bis 5, **dadurch gekennzeichnet, dass** das Gehäuse (1) der Filtervorrichtung (43) und das Gehäuse (53) des Steuerkörpers (9) zu einem gemeinsamen Gehäuse vereinigt sind.

7. Vorrichtung nach einem der Ansprüche 1 bis 6, **dadurch gekennzeichnet, dass** die Siebanordnung (17) eine Vielzahl von Siebabschnitten (16) aufweist, die in zumindest einer Reihe angeordnet sind, deren Richtung parallel ist zur Längsrichtung des Verteilerraumes (7).

8. Vorrichtung nach einem der Ansprüche 1 bis 7, **dadurch gekennzeichnet, dass** der Siebträger (2) relativ zum Gehäuse (1) in eine Siebwechselstellung bewegbar ist.

9. Vorrichtung nach einem der Ansprüche 1 bis 8, **dadurch gekennzeichnet,**
- **dass** der Steuerkörper (9) langgestreckt oder mit einer langgestreckten Verlängerung (40) versehen ist, und
- **dass** der Abfuhrkanal (28) sich in der Längsrichtung des Steuerkörpers (9) oder der Verlängerung (40) bis ins Freie oder in einen Sammelraum für verschmutztes Material erstreckt.

10. Vorrichtung nach Anspruch 9, **dadurch gekennzeichnet, dass** am Auslassende des Abfuhrkanales (28) eine Drossel (36) vorgesehen ist.

11. Vorrichtung nach einem der Ansprüche 1 bis 10, **dadurch gekennzeichnet, dass** zumindest ein als Kolben oder Flachschieber ausgebildeter Siebträger (2) vorgesehen ist, wobei jeder Siebträger (2) zumindest zwei Siebabschnitte (16) trägt.

12. Vorrichtung nach Anspruch 11, **dadurch gekennzeichnet, dass** jeder Siebabschnitt (16) eine Stützlochplatte (20) und eine Rückspüllochplatte (21) und zumindest eine dazwischen angeordnete Siebschicht (22) aufweist.

13. Vorrichtung nach Anspruch 12, **dadurch gekennzeichnet, dass** zumindest ein Siebabschnitt (16) durch eine in der Filtrierstellung zustromseitig angeordnete Trennwand (18) vom benachbarten Siebabschnitt (16) getrennt ist und zu jedem Siebabschnitt (16) ein Verbindungskanal (23) führt, der vorzugsweise mittig relativ zum Siebabschnitt (16) mündet.

14. Vorrichtung nach Anspruch 12 oder 13, **dadurch gekennzeichnet, dass** die Stützlochplatte (20) und die Rückspüllochplatte (21) bogenförmig sind, wobei die konvexe Seite beim Filtriervorgang zustromseitig liegt.

15. Vorrichtung nach einem der Ansprüche 12 bis 14, **dadurch gekennzeichnet, dass** die Stützlochplatte (20) durch zumindest einen Stützkörper (32) gegen den Siebträger (2) abgestützt ist.

16. Vorrichtung nach einem der Ansprüche 1 bis 15, **dadurch gekennzeichnet, dass** zumindest ein Siebabschnitt (16) eine rechteckige oder quadratische Siebfläche, gegebenenfalls mit abgerundeten Ecken, hat.

17. Vorrichtung nach einem der Ansprüche 1 bis 16, **dadurch gekennzeichnet, dass** jeder Steg (14) des Steuerkörpers (9) von einer nockenartigen Ausbuchtung (54) der Oberfläche des Steuerkörpers (9) gebildet ist, die den an den Verbindungskanal (23) anschließbaren Rückspülkanal (27) umgibt und an der Wand des Gehäuses (53) des Steuerkörpers (9) dichtend flächig anliegt.

18. Vorrichtung nach Anspruch 17, **dadurch gekennzeichnet, dass** am Steuerkörper (9) mehrere den Verteilerraum (7) durchsetzende Ausbuchtungen (54) in Längsrichtung des Steuerkörpers (9) und in dessen Umfangsrichtung relativ zueinander versetzt vorgesehen sind und in jeder Ausbuchtung (54)ein Rückspülkanal (27) angeordnet ist.

19. Vorrichtung nach Anspruch 18, **dadurch gekennzeichnet, dass** zwei einander benachbarte Rückspülkanäle (27) von einer gemeinsamen Ausbuchtung (54) umgeben sind.

20. Vorrichtung nach einem der Ansprüche 1 bis 19, **dadurch gekennzeichnet, dass** zumindest ein zusätzlicher Leitkanal (60) zwischen den beiden zu den Stirnenden (61, 62) des Verteilerraumes (7) führenden Leitkanälen (6) in den Verteilerraum (7) mündet.

21. Vorrichtung nach einem der Ansprüche 1 bis 20, **dadurch gekennzeichnet, dass** zumindest zwei Steuerkörper (9) in einem gemeinsamen Gehäuse (53) vorgesehen sind, deren jeder im Bereich der Stirnenden (61, 62) seines Verteilerraumes (7) über Leitkanäle (6) angeströmt wird.

22. Verteiler für eine rückspülbare Filtervorrichtung, der ein Gehäuse (53) und einen darin beweglichen Steuerkörper (9) für die Rückspülung aufweist, dem das zu filtrierende Material über eine Einlassöffnung (4) zugeführt wird und der in der Filtrierstellung den Zustrom dieses Materiales in zumindest zwei Verbindungskanäle (23) freigibt, die mit Siebabschnitten (16) der Filtervorrichtung verbindbar sind, wogegen der Steuerkörper (9) in einer Rückspülstellung einen dieser Verbindungskanäle (25) mit einem im Steuerkörper (9) angeordneten Abfuhrkanal (28) verbindet, wobei die Einlassöffnung (4) mit einem den Steuerkörper (9) großteils umgebenden, im Gehäuse (53) angeordneten Verteilerraum (7) in Verbindung steht, **dadurch gekennzeichnet, dass** die Einlassöffnung (4) mit dem Verteilerraum (7) über zwei Leitkanäle (6) in Verbindung steht, die in den Verteilerraum (7) an dessen Stirnenden (61, 62) im Bereich der äußersten Verbindungskanäle (23) oder außerhalb des Bereiches aller Verbindungskanäle (23) münden.

23. Verteiler nach Anspruch 22, **dadurch gekennzeichnet, dass** der Steuerkörper (9) zumindest einen Steg (14) an seinem Umfang hat, der den Verteilerraum (7) überbrückt und einen Rückspülkanal (27) umgibt, der mit dem Abfuhrkanal (28) in Strömungsverbindung steht, wobei dieser Steg an der Innenwand des Gehäuses (53) dichtend flächig anliegt.

24. Verteiler nach Anspruch 22 oder 23, **dadurch gekennzeichnet, dass** der Steuerkörper (9) ein im Gehäuse (53) verschiebbarer Schieber (37) ist oder ein im Gehäuse (53) verdrehbarer Drehkolben (8), welcher Drehkolben (8) zumindest zwei in Achsrichtung und in Umfangsrichtung des Drehkolbens (8) relativ zueinander versetzte Stege (14) aufweist.

25. Verteiler nach einem der Ansprüche 22 bis 24, **dadurch gekennzeichnet, dass** zumindest ein zusätzlicher Leitkanal (60) in den Verteilerraum (7) zwischen den beiden zu seinen Stirnenden (61, 62) führenden Leitkanälen (6) mündet.

26. Verteiler nach einem der Ansprüche 22 bis 25, **dadurch gekennzeichnet, dass** zumindest zwei Steuerkörper (9) in einem gemeinsamen Gehäuse (53) angeordnet sind, wobei jedem dieser Steuerkörper (9) ein Verteilerraum (7) zugeordnet ist, der im Bereich seiner Stirnenden (61, 62) über Leitkanäle (6) angeströmt wird.

## Claims

1. Backflushable filter device for molten material, particularly for a plastic melt, comprising a housing (1) in which a screen arrangement (17) is located, that includes at least two screen portions (16) separated from one another, to which the melt to be filtered is supplied via at least one distributor (3) which has at least one control body (9) for backflushing which is moveable in a housing (53) having an inlet opening (4) for the material to be filtered, and which, in filtering position, clears the influx of the material to be filtered to all screen portions (16) through connecting channels (23), while in backflushing position interrupting the influx of the material to be filtered to the screen portion (16) to be backflushed, and connects the connecting channel (23) of the backflushed screen portion (16) to a discharge channel (28) situated in said control body (9) and leading away from it, at least the majority of the circumference of the control body (9) being surrounded by a distributor space (7) for the material to be filtered, which is in the housing (53) of the distributor (3), wherein said distributor space (7) may communicate through the connecting channels (23) with all screen portions (16) connected to the distributor (3), **characterised in that** guiding channels (6) lead from said inlet opening (4) to the regions of the two front ends (61, 62) of said distributor space (7), the front ends (61, 62) being situated in the region of the outermost connecting channels (23) or outside the region of all connecting channels (23), and that said discharge channel (28) may be connected to the connecting channel (23) of the respective screen portion (16) to be backflushed via a blackflushing channel (27) of at least one crosspiece (14) of the control body (9) which bridges the distributor space (7).

2. Device according to claim 1, **characterised in**
- **that** the control body (9) is a slider (37) slidable within the housing (53) that surrounds it, and
- **that** the connecting channels (23), which lead to the individual screen portions (16), are offset in sliding direction of said slider (37) relative to each other.

3. Device according to claim 1, **characterised in that** the control body (9) is a rotary piston (8), rotatable about its longitudinal axis (13) within its housing (53), which is sealingly supported in its housing (53) at its two front ends (10), (11), but is surrounded in-between by said distributor space (7).

4. Device according to any of claims 1 to 3, **characterised in that** the connecting channels (23) extend only **in that** housing (53) which surrounds the control body, and that the nests of screens (42) of the housing (1) of the filter device, which receive said screen portions (16), join directly the outer surface of the housing (53) of the control body (9) in the region of the respective orifice of the connecting channel (23).

5. Device according to any of claims 1 to 4, **characterised in that** the screen arrangements (17) are situated in common in a screen support (2).

6. Device according to any of claims 1 to 5, **characterised in that** the housing (1) of the filter device (43) and the housing (53) of the control body (9) are united to a housing in common.

7. Device according to any of claims 1 to 6, **characterised in that** the screen arrangement (17) comprises a plurality of screen portions (16) arranged in at least one row, the direction of which being parallel to the longitudinal direction of said distributor space (7).

8. Device according to any of claims 1 to 7, **characterised in that** the screen support (2) is moveable relative to the housing (1) into a screen replacement position.

9. Device according to any of claims 1 to 8, **characterised in**
- **that** the control body (9) is either elongated or is provided with an elongated prolongation (40), and
- **that** the discharge channel (28) extends in longitudinal direction of said control body (9) or of said prolongation (40) up to open air or into a collector space for contaminated material.

10. Device according to claim 9, **characterised in that** a throttle (36) is inserted at the discharge end of said discharge channel (28).

11. Device according to any of claims 1 to 10, **characterised in that** at least one screen support (2) is provided which is formed as a piston or a flat slide valve, each screen support (2) carrying at least two screen portions (16).

12. Device according to claim 11, **characterised in that** each screen portion (16) comprises a supporting orifice plate (20) and a backflush orifice plate (21) and at least one screen layer (22) arranged therebetween.

13. Device according to claim 12, **characterised in that** at least one screen portion (16) is separated from the adjacent screen portion (16) by a partition wall (18), which, in filtering position, is located at the influx side, while a connecting channel (23) leads each to a screen portion (16) and orifices preferably centrally relative to the screen portion (16).

14. Device according to claim 12 or 13, **characterised in that** said supporting orifice plate (20) and said backflush orifice plate (21) are arcuate, the convex side during filtering procedure being at the influx side.

15. Device according to any of claims 12 to 14, **characterised in that** said supporting orifice plate (20) is supported against said screen support (2) by at least one supporting body (32).

16. Device according to any of claims 1 to 15, **characterised in that** at least one screen portion (16) comprises a rectangular or square screen surface, optionally having rounded corners.

17. Device according to any of claims 1 to 16, **characterised in that** each crosspiece (14) of said control body (9) is formed by a cam-like bulge (54) of the surface of the control body (9) which surrounds the blackflushing channel (27) to be connected to the connecting channel (23), and a surface of which sealingly engages the wall of the housing (53) of the control body (9).

18. Device according to claim 17, **characterised in that** a plurality of bulges (54), which traverse said distributor space (7), are offset relative to each other both in longitudinal direction of said control body (9) and in its peripheral direction, a backflushing channel (27) being situated in each bulge (54).

19. Device according to claim 18, **characterised in that** two adjacent backflushing channels (27) are surrounded in common by a bulge (54).

20. Device according to any of claims 1 to 19, **characterised in that** at least one additional guiding channel (60) orifices into said distributor space (7) between those two guiding channels (6), which lead to the front ends (61, 62) of said distributor space (7).

21. Device according to any of claims 1 to 20, **characterised in that** at least two control bodies (9) are in common in a housing (53), and each one of them is flown on through guiding channels (6) in the region of the front ends (61, 62) of its distributor space (7).

22. Distribution unit for a backflushable filter device, comprising a housing (53) and a control body (9) for backflushing moveable therein, to which the material to be filtered is supplied through an inlet opening (4), and which, in filtering position, clears the influx of this material into at least two connecting channels (23), which may be brought into communication with screen portions (16) of the filtering device, while said control body (9), in a backflushing position, connects one of these connecting channels (25) to a discharge channel (28) situated in said control body (9), the inlet opening (4) being in communication with a distributor space (7) which surrounds the majority of said control body (9) and is located in said housing (53), **characterised in that** said inlet opening (4) communicates with said distributor space (7) via two guiding channels (6), which orifice into said distributor space (7) at its front ends (61, 62) either in the region of the outermost connecting channels (23) or outside the region of all connecting channels (23).

23. Distribution unit according to claim 22, **characterised in that** the control body (9) comprises at least one crosspiece (14) at its circumference, which bridges said distributor space (7) and surrounds a backflushing channel (27), which has a flow communication with said discharge channel (28), wherein a surface of this crosspiece sealingly engages the inner wall of the housing (53).

24. Distribution unit according to claim 22 or 23, **characterised in that** the control body (9) is either a slider (37) slidable within the housing (53) or a rotary piston (8) rotatable within the housing (53), said rotary piston (8) comprising at least two crosspieces (14) offset relative to each other both in axial direction and in peripheral direction of said rotary piston (8).

25. Distribution unit according to any of claims 22 to 24, **characterised in that** at least one additional guiding channel (60) orifices into said distributor space (7) between those two guiding channels (6), which lead to its front ends (61, 62).

26. Distribution unit according to any of claims 22 to 25, **characterised in that** at least two control bodies (9) are in common in a housing (53), and a distributor space (7) is assigned to each one of these control bodies and is flown on in the region of the front ends (61, 62) through guiding channels (6).

## Revendications

1. Dispositif filtrant à lavage à contre-courant pour une matière en fusion, particulièrement pour une matière plastique en fonte, comprenant un boîtier (1), dans lequel une structure de criblage (17) est disposée, qui présente au moins deux sections de criblage (16) séparées, auxquelles la fonte à filtrer est amenée à travers au moins un distributeur (3), qui comprend au moins un corps pilote (9) pour le lavage à contre-courant, déplaçable dans un boîtier (53), et qui est pourvu d'un orifice d'admission (4) pour la matière à filtrer, ledit corps pilote, dans la position de filtrage, débloquant l'affluence de la matière à filtrer à tous les sections de criblage (16) à travers des canaux de raccordement (23), tandis qu'il interrompe l'affluence de la matière à filtrer, dans une position de lavage à contre-courant, à cette section de criblage (16), qui doit être lavée à contre-courant, et communique le canal de raccordement (23) de la section de criblage (16) lavée à contre-courant avec un canal de fuite (28), qui est disposé dans le corps pilote (9) et évacue de ceci, au moins la majorité de la périphérie du corps pilote étant entourée par un espace de distribution (7) pour la matière à filtrer, qui est situé dans le boîtier (53) du distributeur (3), ledit espace de distribution (7) pouvant être mis en communication à travers les canaux de raccordement (23) avec tous les sections de criblage (16) reliées au distributeur (3), **caractérisé en ce, que** des canaux de guidage (6) conduisent à partir de l'orifice d'admission (4) aux zones des deux bouts frontaux (61, 62) de l'espace de distribution (7), lesdits bouts frontaux (61, 62) étant situés dans la zone des canaux de raccordement (23) extrêmes ou au dehors de la zone de tous les canaux de raccordement (23), et que le canal de fuite (28) peut être mis en communication avec le canal de raccordement (23) de la section respective de criblage (16) à laver à contre-courant à travers un canal de lavage à contre-courant (27) d'au moins une entretoise (14) du corps pilote (9), qui superpose l'espace de distribution (7).

2. Dispositif selon la revendication 1, **caractérisé en ce,**
- **que** le corps pilote (9) est un tiroir (37) déplaçable dans le boîtier (53), qui l'entoure, et
- **que** les canaux de raccordement (23), qui conduisent aux sections de criblage (16) individuelles, sont décalés l'un par rapport à l'autre en direction du déplacement du tiroir (37).

3. Dispositif selon la revendication 1, **caractérisé en ce, que** le corps pilote (9) est un piston rotatif (8) tournant autour de son axe longitudinal (13) dans son boîtier (53), qui est logé d'une façon étanche dans son boîtier (53) à ses deux bouts frontaux (10), (11), mais est entouré entre eux par l'espace de distribution (7).

4. Dispositif selon une quelconque des revendications 1 à 3, **caractérisé en ce, que** les canaux de raccordement (23) s'étendent seulement dans ce boîtier (53), qui entoure le corps pilote, et que les poches de criblage (42) du boîtier du dispositif filtrant, qui reçoivent les sections de criblage (16), se joignent directement à la parois extérieure du boîtier (53) du corps pilote (9) dans la zone de la bouche respective du canal de raccordement (23).

5. Dispositif selon une quelconque des revendications 1 à 4, **caractérisé en ce, que** les structures de criblage (17) sont disposées en commun dans un support de crible (2).

6. Dispositif selon une quelconque des revendications 1 à 5, **caractérisé en ce, que** le boîtier du dispositif filtrant (43) et le boîtier (53) du corps pilote (9) sont unifiés à former un boîtier en commun.

7. Dispositif selon une quelconque des revendications 1 à 6, **caractérisé en ce, que** la structure de criblage (17) comprend une pluralité de sections de criblage (16) disposées dans au moins une file, dont la direction est parallèle à la direction longitudinale de l'espace de distribution (7).

8. Dispositif selon une quelconque des revendications 1 à 7, **caractérisé en ce, que** le support de crible (2) est déplaçable relativement au boîtier (1) à une position de remplacement de crible.

9. Dispositif selon une quelconque des revendications 1 à 8, **caractérisé en ce,**
- **que** le corps pilote (9) est oblong ou est pourvu d'une prolongation (40) oblongue, et
- **que** le canal de fuite (28) s'étend en direction longitudinale du corps pilote (9) ou de la prolongation (40) jusqu'au plein air ou à un espace collecteur pour la matière contaminée.

10. Dispositif selon la revendication 9, **caractérisé en ce, qu'**un étranglement (36) est prévu au bout de sortie du canal de fuite (28).

11. Dispositif selon une quelconque des revendications 1 à 10, **caractérisé en ce, qu'**au moins un support de crible (2) est prévu, qui est formé comme un piston ou comme un tiroir aplati, chaque support de crible (2) supportant au moins deux sections de criblage (16).

12. Dispositif selon la revendication 11, **caractérisé en ce, que** chaque section de criblage (16) comprend une plaque de support à trous (20) et une plaque de lavage à contre-courant à trous (21) et au moins une couche de criblage (22) située entre eux.

13. Dispositif selon la revendication 12, **caractérisé en ce, qu'**au moins une section de criblage (16) est séparée de la section de criblage (16) adjacente par une cloison de séparation (18), qui dans la position de filtrage, est située au côté d'affluence, et un canal de raccordement (23) amène à chaque section de criblage (16), qui, de préférence, débouche à un endroit central relativement à la section de criblage (16).

14. Dispositif selon la revendication 12 ou 13, **caractérisé en ce, que** la plaque de support à trous (20) et la plaque de lavage à contre-courant à trous (21) sont arquées, le côté convexe, lors de l'opération de filtrage, étant situé au côté d'affluence.

15. Dispositif selon une quelconque des revendications 12 à 14, **caractérisé en ce, que** la plaque de support à trous (20) est appuyée contre le support de crible (2) par au moins un corps d'appui (32).

16. Dispositif selon une quelconque des revendications 1 à 15, **caractérisé en ce, qu'**au moins une section de criblage (16) comprend une surface de criblage rectangulaire ou carrée, le cas échéant avec des coins arrondis.

17. Dispositif selon une quelconque des revendications 1 à 16, **caractérisé en ce, que** chaque entretoise (14) du corps pilote (9) est formé par une grosseur (54) en forme de came de la surface du corps pilote (9), qui entoure le canal de lavage à contre-courant (27) capable à être relié au canal de raccordement (23), et qui colle d'une façon étanche avec sa surface à la parois du boîtier (53) du corps pilote (9).

18. Dispositif selon la revendication 17, **caractérisé en ce, que** plusieurs grosseurs (54) sont prévues au corps pilote (9) en direction longitudinale du corps pilote (9), qui pénètrent l'espace de distribution (7) et sont décalées l'une relativement à l'autre en direction circonférentielle, un canal de lavage à contre-courant (27) étant disposé dans chaque grosseur (54).

19. Dispositif selon la revendication 18, **caractérisé en ce, que** deux canaux adjacents de lavage à contre-courant (27) sont entourés par une grosseur (54) en commun.

20. Dispositif selon une quelconque des revendications 1 à 19, **caractérisé en ce, qu'**au moins un canal de guidage additionnel (60) débouche dans l'espace de distribution (7) entre les deux canaux de guidage (6), qui amènent aux bouts frontaux (61, 62) de l'espace de distribution (7).

21. Dispositif selon une quelconque des revendications 1 à 20, **caractérisé en ce, qu'**au moins deux corps pilotes (9) sont prévus en commun dans un boîtier (53), dont chacun est afflué à travers des canaux de guidage (6) dans la zone des bouts frontaux (61, 62) de son espace de distribution (7).

22. Organe de distribution pour un dispositif filtrant à lavage à contre-courant, qui comprend un boîtier (53) et un corps pilote (9) déplaçable dans ceci pour le lavage à contre-courant, auquel la matière à filtrer est amenée à travers un orifice d'admission (4) et qui, en position de filtrage, débloque l'affluence de cette matière à travers au moins deux canaux de raccordement (23), qui peuvent être reliés aux section de criblage (16) du dispositif filtrant, tandis que le corps pilote (9), dans une position de lavage à contre-courant, communique un de ces canaux de raccordement (25) avec un canal de fuite (28), qui est disposé dans le corps pilote (9), l'orifice d'admission (4) étant en communication avec un espace de distribution (7) situé dans le boîtier (53) et entourant la majorité de la périphérie du corps pilote (9), **caractérisé en ce, que** l'orifice d'admission (4) est en communication avec l'espace de distribution (7) à travers deux canaux de guidage (6), qui débouchent dans l'espace de distribution (7) à ses bouts frontaux (61, 62) dans la zone des canaux de raccordement (23) extrêmes ou au dehors de la zone de tous les canaux de raccordement (23).

23. Organe de distribution selon la revendication 22, **caractérisé en ce, que** le corps pilote (9) comprend à sa circonférence au moins une entretoise (14), qui superpose l'espace de distribution (7) et entoure un canal de lavage à contre-courant (27), qui est en communication d'écoulement avec le canal de fuite (28), une surface de cette entretoise étant collée d'une façon étanche à la parois intérieure du boîtier (53).

24. Organe de distribution selon la revendication 22 ou 23, **caractérisé en ce, que** le corps pilote (9) est un tiroir (37) ou un piston rotatif (8) tournant dans le boîtier (53), ledit piston rotatif (8) présentant au moins deux entretoises (14) décalées l'une relativement à l'autre en direction axiale et en direction périphérique du piston rotatif (8).

25. Organe de distribution selon une quelconque des revendications 22 à 24, **caractérisé en ce, qu'**au moins un canal de guidage additionnel (60) débouche dans l'espace de distribution (7) entre les deux canaux de guidage (6), qui amènent à ses bouts frontaux (61, 62).

26. Organe de distribution selon une quelconque des revendications 22 à 25, **caractérisé en ce, qu'**au moins deux corps pilotes (9) sont prévus en commun dans un boîtier (53), un espace de distribution (7) étant associé à chacun de ces corps pilotes (9) et est afflué à travers des canaux de guidage (6) dans la zone des bouts frontaux (61, 62).
